# EUROPÄISCHE PATENTANMELDUNG

(11) **EP 0 634 247 A1**
(43) Veröffentlichungstag der Anmeldung: **18.01.1995**
(21) Anmeldenummer: 93110657.9
(22) Anmeldetag: 03.07.1993
(51) Int. Cl.: B23Q 1/01, B23P 23/04, B23K 7/00

(54) **Anlage zur Bearbeitung grossdimensionaler Werkstücke aus Metall**

(71) Anmelder: Hagen, Urs, CH-5444 Künten (CH); Widmer, Hanspeter, CH-5000 Aarau (CH)
(72) Erfinder: Hagen, Urs, CH-5444 Künten (CH); Widmer, Hanspeter, CH-5000 Aarau (CH)
(74) Vertreter: Blum, Rudolf Emil Ernst

(57) **Zusammenfassung**

Eine Laufkatzenfahrschiene (7) ist von einer portalkranförmigen Tragvorrichtung (6;18) verfahrbar getragen. Auf der Laufkatzenfahrschiene (7) ist eine Laufkatze (8) gelagert. Die Laufkatze (8) trägt einen vertikal verlaufenden und verschiebbaren Träger (9). Bei seinem unteren Ende ist ein um eine horizontale Achse (B) rotierbares Werkzeugkopfglied (4) angeordnet. Das Werkzeugkopfglied (4) trägt wahlweise einsetzbare Werkzeuge, zum Bohren/Fräsen (11), Plasma-Brennschneiden (14), Autogen-Brennschneiden (13), Laser-Brennschneiden. Auf Schienen (24) verfahrbare Rollböcke (1,2) dienen zum Tragen von rohrförmigen Werkstücken (28), die in einer Einspannvorrichtung (14) eines Rollbockes (2) eingespannt und rotiert werden können. Plattenförmige Werkstücke (33) werden auf einem Verschiebewagen (4) getragen. Mit dieser Anlage können Werkstücke (28;33) rechnergesteuert durch unterschiedliche Bearbeitungswerkzeuge bearbeitet werden, so dass keine manuellen Eingriffe notwendig sind.

## Beschreibung

Die vorliegende Erfindung betrifft eine Anlage zur Bearbeitung grossdimensionaler Werkstücke aus Metall, mit mindestens einer bodengestützten Werkstückvorrichtung und einem Werkzeugkopfglied zur gleichzeitigen Aufnahme mehrerer Bearbeitungswerkzeuge und -geräte, welches Werkzeugkopfglied von einer portalkranförmigen Tragvorrichtung getragen ist, die ein entlang waagrechter Träger verfahrbares Laufkatzenfahrschienenglied und eine daran verfahrbare Laufkatze aufweist.

Die Bearbeitung von grossdimensionalen Werkstücken, z.B. Rohre für Oel-Pipelines, für Verfahrensanlagen, Stahlplatten für unterschiedliche Anwendungen, ist aufgrund von Gewicht und Abmessungen sehr zeitaufwendig. Insbesondere sind viele manuelle Handhabungen notwendig, beispielsweise wenn solche Werkstücke an verschiedenen Stellen und unterschiedlich bearbeitet werden müssen, und wenn diese Werkstücke bewegt werden müssen.

Ziel der Erfindung ist, die angeführten Nachteile zu beheben.

Die erfindungsgemässe Anlage ist gekennzeichnet durch einen vertikal angeordneten, langgestreckten und torsionsfesten Träger, der in der Laufkatze in vertikaler Richtung verschiebbar getragen ist und ein unteres Ende aufweist, an welchem das Werkzeugkopfglied um eine horizontal verlaufende Axe drehbar angeordnet ist.

Nachfolgend wird der Erfindungsgegenstand anhand der Zeichnungen beispielsweise näher erläutert. Es zeigt:
Figur 1 vereinfacht eine Seitenansicht einer Ausführung der erfindungsgemässen Anlage,
Figur 2 eine Ansicht in Richtung des Pfeiles A der Figur 1, und
Figur 3 schematisch und in einem vergrösserten Massstab eine schaubildliche Ansicht eines beispielsweisen Werkzeugkopfgliedes.

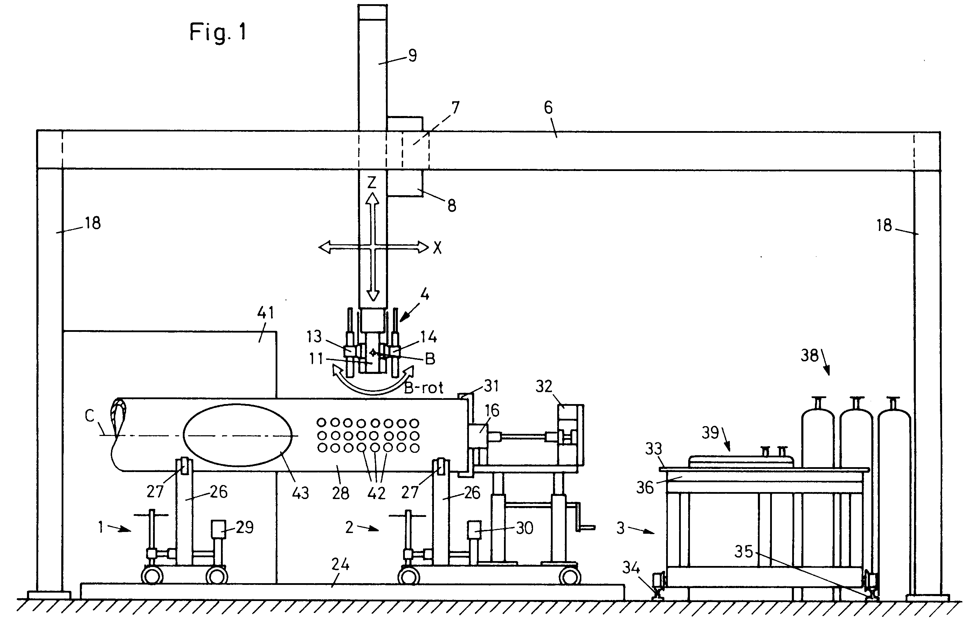

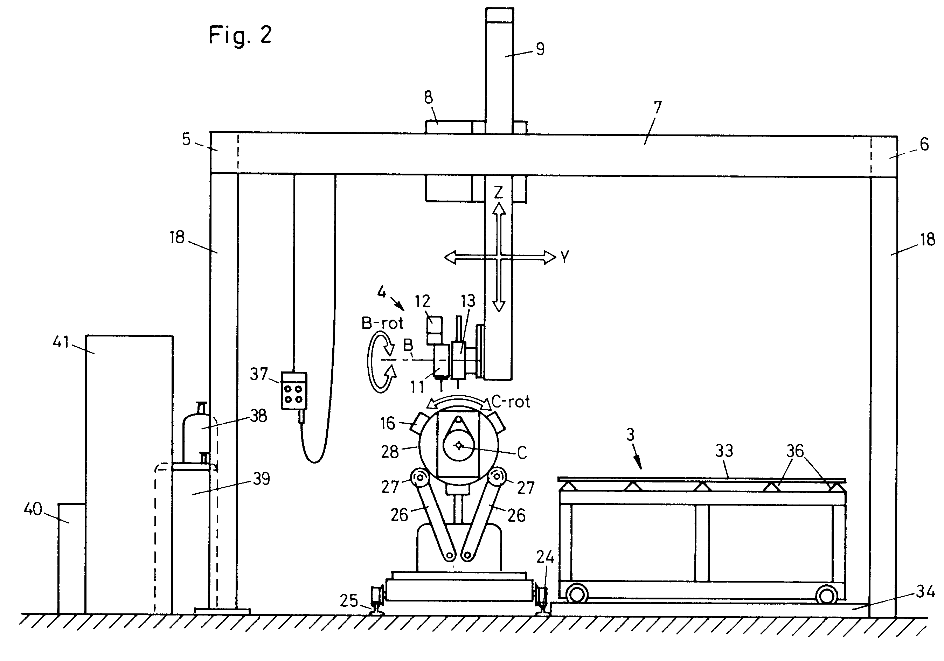

Die Anlage weist eine portalkranförmige Tragvorrichtung mit Tragsäulen 18 auf. Auf diesen Tragsäulen 18 sind waagrechte Träger 5,6 abgestützt. Diese Träger 5, 6 tragen ein entlang derselben verfahrbares Laufkatzenfahrschienenglied 7, welches eine darauf verfahrbare Laufkatze 8 trägt. Die Verschieberichtung des Laufkatzenfahrschienengliedes 7 ist in der Figur 1 mit dem Pfeil X angedeutet, und die Verschieberichtung der Laufkatze 8 ist in der Figur 2 mit dem Pfeil Y angedeutet. In dieser Laufkatze 8 ist ein vertikal verlaufender, torsionsfester Träger 9 gehalten. Dieser Träger 9 kann beispielsweise ein Stahlprofil sein. Der Träger 9 ist mittels einer geeigneten, allgemein bekannten Antriebsrichtung, beispielsweise Zahnstange und Ritzel, entlang der Laufkatze 8 in vertikaler Richtung verschiebbar. Diese Verschieberichtung ist mit dem Pfeil Z angedeutet. Ein Werkzeugkopfglied, das allgemein mit der Bezugsziffer 4 bezeichnet ist, ist mit dem unteren Ende des vertikalen Trägers 9 verbunden. Das Werkzeugkopfglied 4 ist um eine horizontale Axe B in Richtung des Doppelpfeiles B-rot drehbar gelagert. Eine Einrichtung 11 zur abspanenden Bearbeitung eines Werkstückes, z.B. ein Fräswerkzeug oder ein Bohrwerkzeug einschliesslich dem Antriebsmotor 12 ist beim freien Ende des Werkzeugkopfgliedes 4 angeordnet. Die Bezugsziffer 10 bezeichnet das rotierende Aufnahmeglied für das Montieren eines Fräsers oder Bohrers.

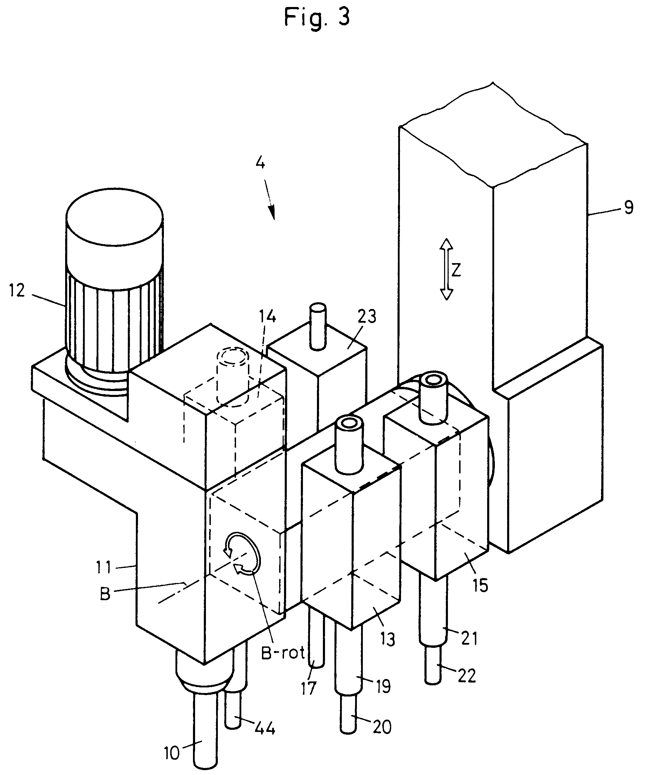

Weiter enthält das Werkzeugkopfglied 4 ein Aufnahmeglied 13 zur Aufnahme des Brenners 20 einer Autogenschweissanlage auf. Durch das Aufnahmeglied 13 verläuft ein Träger 19, der in der Figur 3 vereinfacht als Rohrstück gezeichnet ist. In diesem Träger 19 ist der Brenner 20 der Autogenschweissanlage gehalten, welcher Brenner 20 ebenfalls rein schematisch eingezeichnet ist. Es ist zu bemerken, dass aus Gründen der Uebersichtlichkeit keine Leitungen, z.B. Elektrokabel für Antriebsmotoren, Leitungen zur Uebertragung von Steuerbefehlen, Pneumatikleitungen, etc. weggelassen sind.

Das Aufnahmeglied 13 ist als Zylinder und der Träger 19 ist als damit zusammenwirkender Kolben ausgebildet, der pneumatisch durch Druckluft im Zylinder verschiebbar ist. Wenn mit der beispielsweisen Fräseinrichtung ein Werkstück bearbeitet wird, muss offensichtlich der im Träger 19 gehaltene Brenner 20 der Autogenschweissanlage, die während dem Fräsen nicht im Betrieb steht, vom Werkstück entfernt sein. Umgekehrt, wenn eine Schweissoperation am Werkstück durchgeführt wird, muss das Fräswerkzeug vom Werkstück entfernt sein.

Aus diesem Grund befindet sich der Träger 19, wenn nicht geschweisst wird, in einer im zylinderförmigen Aufnahmeglied 13 hinaufgezogenen Ruhestellung.

Wird hingegen geschweisst, befindet sich der Träger 19 mit dem Brenner 20 in einer unteren Arbeitsstellung, so dass beim Schweissen das Fräswerkzeug vom Werkstück entfernt ist.

Die entsprechende Bewegung des Trägers 19 zwischen den zwei genannten Stellungen erfolgt beim vorliegenden Ausführungsbeispiel pneumatisch. Dabei kann beispielsweise der Träger 19 durch Druckluft sowohl in der Ruhestellung als auch in der Arbeitsstellung gehalten werden, oder der Träger 19 kann durch Federkraft in der Ruhestellung gehalten werden und durch die Federkraft überwindende Druckluft in die Arbeitsstellung gesteuert werden. Weitere mögliche Ausführungen können auch eine Steuerung des Trägers 19 mittels Elektromagnete aufweisende Vorrichtungen umfassen.

Die Bezugsziffer 14 bezeichnet ein weiteres Aufnahmeglied zur Aufnahme des Brenners 44 einer Plasmaschweissanlage. Die Ausbildung des Aufnahmegliedes 14 entspricht der Ausbildung des Aufnahmegliedes 13.

Weiter ist neben dem Aufnahmeglied 13 ein drittes Aufnahmeglied 15 mit einem Träger 21 vorhanden. Der Träger 21 trägt die Fokussiereinrichtung 22 einer Laser-Schweissanlage. Auch hier ist der Träger 21 mit der darin gehaltenen Fokussiereinrichtung 22 zwischen einer Ruhestellung und einer Arbeitsstellung verschiebbar.

Der Ordnung halber soll bemerkt werden, dass sämtliche Ausführungen der erfindungsgemässen Anlage mit allen oben beschriebenen Schweissanlagen bestückt sein müssen. Die Ausrüstung der Anlage richtet sich nach den jeweils vorgesehenen Arbeiten am Werkstücken.

Die Mittelachsen der Welle 10, der Träger 19, 21, bzw. der getragenen Brenner 20,44 und der Fokussiereinrichtung 22 verlaufen parallel zueinander. Dieses vereinfacht das rechnergesteuerte Positionieren der verschiedenen Werkzeuge, bzw. Geräte beim unterschiedlichen (spanabhebend, Brennschneiden, Lasereinsatz) Bearbeiten eines Werkstückes.

In einem noch weiteren Aufnahmeglied 23 ist ein Mitnahmedorn 17 angeordnet. Der Mitnahmedorn 17 muss nicht beim eingezeichneten Ort angeordnet sein, er könnte ebenso gut bei der Fräs- oder Bohrmaschine 11 angeordnet sein. Wie unten noch mehr im Detail beschrieben sein wird, dient der Mitnahmedorn 17 dazu, ein überlanges Werkstück vorzuschieben, indem er durch ein durch die Maschine 11 in das Werkstück gebohrtes Loch hineinbewegt wird, so dass durch eine Verschiebung der Laufkatze 8, bzw. der Laufkatzenfahrschiene 7 das Werkstück vorgezogen werden kann.

Mit der erfindungsgemässen Anlage können unter anderem Rohre bearbeitet werden. Solche Rohre können beispielsweise Durchmesser im Bereeich von ca. 100 bis 1200 Millimeter und eine Länge bis ca. 13000 Millimeter aufweisen.

Zur Abstützung solcher Rohre sind auf Schienen 24,25 verfahrbare Rollböcke 1,2 vorhanden. Die Rollböcke 1,2 weisen verstellbare, scherenförmig angeordnete Tragstangen 26 mit Stützrollen 27 zum Tragen eines zu bearbeitenden Rohres 28 auf.

Beide Rollböcke 1,2 weisen jeweils eine gesteuerte Bremseinrichtung 29,30 auf, so dass sie gesteuert arretiert oder im Leerlauf entlang den Schienen 24,25 verschoben werden können.

Der Rollbock 2 trägt weiter eine Einspannvorrichtung 16 mit Klemmbacken 31. Die Einspannvorrichtung 16 ist mit einem Motorantrieb 32 verbunden. Durch diesen Motorantrieb 32 kann ein in der Einspannvorrichtung 16 geklemmt gehaltenes Rohr 28 um die horizontale Achse C in Richtung des Pfeiles C-rot rotiert werden.

Zur Bearbeitung von plattenförmigen Werkstücken, beispielsweise Grossstahlplatten mit einer Länge von 6000 Millimetern und einer Dicke von 45 Millimetern wird ein Verschiebewagen 3 zum Tragen solcher Platten 33 verwendet. Der Verschiebewagen 3 läuft ebenfalls auf Schienen 34,35, jedoch in einer Richtung quer zu der Verschieberichtung der Rollböcke 1 und 2. Der Verschiebewagen weist ebenfalls eine Bremsanlage auf, so dass er wahlweise arretiert oder im Freilauf bewegt werden kann. Die zu bearbeitende Platte 33 wird auf dem Verschiebewagen 33 mittels mehrerer langgestreckter Träger 36 in Linienberührung getragen.

In den Zeichnungsfiguren sind weiter das Bedienungspaneel 37 für die Laufkatze 8, die Flaschenbatterie 38 der Autogen-Schweissanlage, die Plasma-Anlage 39, der elektronische CNC-Rechner 40 und der Schaltschrank 41 eingezeichnet.

Zur Bearbeitung eines Rohres 28 wird dieses mittels irgendwelcher bekannter Hebevorrichtung auf die Rollböcke 1,2 gelegt und durch die Einspannvorrichtung 16 eingespannt. Man nehme nun an, es soll eine Folge von Löcher 42 gemäss der Darstellung nach Figur 1 in das Rohr 28 gebohrt werden. Dazu werden die in den Aufnahmegliedern 13,14,15 angeordneten Brenner, bzw. die Fokussiereinrichtung der Laser-Schweissanlage in ihre Ruhestellung bewegt und mit der Bohrvorrichtung 11 die Löcher 42 gesteuert gebohrt. Um nun die entlang dem Umfang des Rohres 28 verteilten Löcher 42 zu bohren, wird das Rohr 28 durch die vom Motor 32 getriebene Einspannvorrichtung 16 von der CNC-Steuerung gesteuert, um die C-Achse gedreht, so dass die Löcher 42 über dem Umfang des Rohres 28 verteilt gebohrt werden können. Somit lassen sich mit der erfindungsgemässen Anlage vollautomatisch Löcher bei beliebigen Positionen in ein Rohr bohren.

In Vorschubrichtung des Rohres 28 den Löchern 42 nachfolgend ist in der Figur 1 ein sogenannter Sattel 43 im Rohr 28 eingezeichnet. Ein Sattel wird beispielsweise bei spitzwinklig miteinander zu verbindenden Rohrstücken, z.B. Rohrabzweigungen, benötigt. Es sei angenommen, dass der Sattel 43 mit der Autogen-Brennschneidanlage geschnitten werden soll.

Dazu wird der Träger 19 mit dem Brenner 20 der Autogenschweissanlage in die Arbeitsstellung ausgefahren. Bekanntlich steht die Innenumfangswand eines solchen Sattels nicht senkrecht zur Umfangswand des Rohres, sondern verläuft schiefwinklig zu derselben, bzw. parallel zur Umfangswand des an das Rohr anzuschweissenden Abzweigrohres. Folglich wird der Brenner 20 schräggestellt, indem das Werkzeugkopfglied 4 um die B-Achse rotiert wird. Die longitudinale Relativbewegung zwischen dem Rohr 28 und dem Werkzeugkopfglied 20 in Richtung der X-Achse und die Rotationsbewegung des Rohres 28 um die C-Achse werden wieder automatisch gesteuert.

Ein Vorschieben des Rohres 28, falls dieses extrem lang ist, wird mit Hilfe des Mitnahmedornes 17 durchgeführt. Zum vorschieben des Rohres 28 wird der vertikal verschiebbare Mitnahmedorn 17 in ein vorgebohrtes Loch eingesetzt. Dieses Loch kann entweder ein ohnehin benötigtes Loch sein oder an einer Stelle eingebohrt werden, wo nachfolgend gebohrt oder durch die Brenner geschnitten wird. Ist der Mitnahmedorn 17 im jeweiligen Loch eingesetzt, werden die Bremsen 29,30 der Rollböcke 1,2 gesteuert gelöst und durch ein Verschieben der Laufkatze 8 in Richtung der X-Achse kann nun das Rohr 28 vorgeschoben werden.

Zur Bearbeitung von Platten 33 wird der Verschiebewagen 3 eingesetzt. Dieser kann z.B. mittels einem Hubstapler beladen werden, wobei die Zinken der Ladegabel zwischen den Trägern 36 eingeschoben werden. Die an den Platten erfolgende Bearbeitung, das Bohren, Fräsen, Brennschneiden, etc. erfolgt wiederum rechnergesteuert. Während dem Bearbeiten einer Platte ist der Verschiebewagen durch seine Bremsvorrichtung arretiert.

Die Anlage weist grundsätzlich vier Verfahrwege für das Bearbeiten auf, nämlich den X-Verfahrensweg und den Y-Verfahrensweg entsprechend den Bewegungsmöglichkeiten der Laufkatze 8, den Z-Verfahrensweg entsprechend der Bewegungsmöglichkeit des von der Laufkatze 8 getragenen vertikalen Trägers 9, und den B-Verfahrensweg entsprechend der Rotation des Werkzeugkopfgliedes um die B-Achse.

## Patentansprüche

1. Anlage zur Bearbeitung grossdimensionaler Werkstücke aus Metall, mit mindestens einer bodengestützten Werkstücktragvorrichtung (1,2;3) und einem Werkzeugkopfglied (4) zur gleichzeitigen Aufnahme mehrerer Bearbeitungswerkzeuge und -geräte, welches Werkzeugkopfglied (4) von einer portalkranförmigen Tragvorrichtung (6,18) getragen ist, die ein entlang waagrechter Träger (5,6) verfahrbares Laufkatzenfahrschienenglied (7) und eine daran verfahrbare Laufkatze (8) aufweist, gekennzeichnet durch einen vertikal angeordneten, langgestreckten und torsionsfesten Träger (9), der in der Laufkatze (8) in vertikaler Richtung verschiebbar getragen ist und ein unteres Ende aufweist, an welchem das Werkzeugkopfglied (4) um eine horizontal verlaufende Achse (B) drehbar angeordnet ist.

2. Vorrichtung nach Anspruch 1, dadurch gekennzeichnet, dass das um eine horizontal verlaufende Achse (B) drehbare Werkzeugkopfglied (4) eine Einrichtung (11) einschliesslich Antrieb (12) zur abspanenden Bearbeitung eines Werkstückes aufweist, ein erstes Aufnahmeglied (13) für einen darin gesteuert längsverschiebbar gehaltenen Brenner (20) einer Autogenschweissanlage und ein zweites Aufnahmeglied (14) für einen darin gesteuert längsverschiebbar gehaltenen Brenner (44) einer Plasmaschweissanlage aufweist.

3. Vorrichtung nach Anspruch 2, dadurch gekennzeichnet, dass das drehbare Werkzeugkopfglied (4) ein drittes Aufnahmeglied (15) für eine darin gesteuert längsverschiebbar gehaltene Fokussiereinrichtung (22) einer Laserschneid- und -schweissanlage aufweist.

4. Vorrichtung nach Anspruch 2 oder 3, dadurch gekennzeichnet, dass die Einrichtung (11) zur abspanenden Bearbeitung und die Aufnahmeglieder (13,14, 15) derart ausgebildet sind, dass die Mittelachsen der darin eingesetzten Bearbeitungswerkzeuge und -geräte (10, 20,22,44) parallel zueinander verlaufen.

5. Vorrichtung nach Anspruch 1, dadurch gekennzeichnet, dass die mindestens eine Werkstücktragvorrichtung eine parallel zum Laufkatzenfahrschienenglied (7) verschiebbare Rollbockanordnung (1,2) mit einer rotierbaren Einspannvorrichtung (16) für zu bearbeitende Werkstücke (28) aufweist, mittels welcher eingespannte Werkstücke (28) um eine parallel zur Verschieberichtung (X) der Rollbockanordnung (1,2) verlaufende Achse (C) gesteuert rotierbar sind.

6. Vorrichtung nach Anspruch 5, dadurch gekennzeichnet, dass das Werkzeugkopfglied (4) einen Mitnahmedorn (17) und die Rollbockanordnung (1,2) eine Bremseinrichtung (29,30) aufweist, derart, dass bei überlangen Werkstücken der Mitnahmedorn in eine im Werkstück dazu ausgebildete Ausnehmung einsetzbar und bei gelöster Bremseinrichtung (29,30) durch ein Verschieben der Laufkatze (8) entlang des Laufkatzenfahrschienengliedes (7) das Werkstück (28) zusammen mit der Werkstücktragvorrichtung (1,2) vorschiebbar ist.

7. Vorrichtung nach Anspruch 1, dadurch gekennzeichnet, dass die mindestens eine Werkstücktragvorrichtung (1,2) zur Aufnahme von rotierbar getragenen Werkstücken (28) mit einer mindestens annähernd kreisrunden Querschnittsform ausgebildet ist, und dass neben der mindestens einen Werkstücktragvorrichtung (1,2) eine weitere Werkstücktragvorrichtung (3) zur Aufnahme von plattenförmigen Werkstücken (33) angeordnet ist, welche rechtwinklig zur erstgenannten Werkstücktragvorrichtung (1,2) verfahrbar angeordnet ist.
